# EUROPEAN PATENT SPECIFICATION

(11) **EP 4 487 086 B1**
(45) Date of publication and mention of the grant of the patent: **22.04.2026**
(21) Application number: 23715614.6
(22) Date of filing: 01.03.2023
(51) Int. Cl.: G01F 1/84

(54) **MASS FLOW METER**
MASSENDURCHFLUSSMESSER
DÉBITMÈTRE MASSIQUE

(30) Priority: 02.03.2022 NO 20220264
(43) Date of publication of application: 08.01.2025
(73) Proprietor: CIGNUS INSTRUMENTS AS, 0379 Oslo (NO)
(72) Inventor: SEEBERG, Bjørn Erik, 0768 Oslo (NO)
(74) Representative: Bryn Aarflot AS
(86) International application number: PCT/NO2023/050044
(87) International publication number: WO 2023/167591

(56) References cited:
- GB-A- 1 591 974
- US-A- 4 420 983
- US-A- 4 493 215
- US-A- 5 048 351
- US-A- 5 392 656
- US-B2- 10 393 560

## Description

### INTRODUCTION

The invention relates to a mass flow meter and a method for measuring a mass flow of fluid through a tubular housing. In particular, the invention relates to a mass flowmeter with a flexible plate. Uses of the mass flow meter and method are also disclosed.

### BACKGROUND

Fluids such as liquid CO₂ for carbon dioxide capture and storage (CCS), fluid petroleum products, natural gas, hydrogen and water are often transported in pipelines. Such fluids are often transported under high pressure. The pipelines may be subsea on large depths, but also on land. Fluids may also be transported through pipelines in land facilities such as oil refineries or other processing facilities. The fluids are transported in pipelines with large dimensions and the fluids typically may have low density. Liquid H₂ has e.g. low density while H₂ in gas form has extremely low density. A high density fluid such as e.g. liquid CO₂, and natural gas, are often transported/stored subsea at high depths and at a water temperature of 4°C or in long pipelines with cooling arrangements. Liquid CO₂ may not be transported at atmospheric pressure or at environmental temperatures above 4°C as this would require a too high pressure to enable transport in a pipeline for practical reasons (thickness of pipeline etc). At 4°C on the ocean floor the pressure would be about 90 bar. Building a pipeline for transport of liquid CO₂ at the ocean floor would therefore be possible and practical. Liquid CO₂ has a mass density of about 1,1 tons per cubic meter. Liquid H₂ has a mass density of about 70kg per cubic meter. The fluid transport may be monitored in real-time by measuring the amount of fluid moving through the pipeline. Mass flow measurements may be preferred over volume flow, as mass do not vary with changes in pressure or temperature. Mass flow measurements may thus be more accurate. Mass flow meters based on ultrasound measurements may also not be applicable for use with liquids such as e.g. liquid CO₂, as the ultrasound waves are attenuated by the liquid.

Mass flow meters using traditional Coriolis technology can operate by vibrating a pipe carrying a flowing fluid between an inlet and an outlet. This vibration of the pipe provides an oscillation, a variation of a measure of the pipe (e.g. position) about a central value. The inertia of the flowing fluid resists the vibration motion and causes the pipe to twist. This twist results in a time lag (phase shift) of oscillations of the pipe between the inlet side and the outlet side and this phase shift is directly affected by the mass of the fluid passing through the pipe. Traditional Coriolis flow meters divide the fluid flow in two pipes in order to provide net zero force from the drive.

Traditional Coriolis direct mass flow measurement may be unsuitable for measurements of mass flow for high pressure fluids, in particular for low density fluids d. Indirect mass flow measurements of high pressure fluids may be performed by use of differential pressure and/or density of the fluid, but may be inaccurate.

E.g. hydrogen and CO₂ transport pipes have very large dimensions (diameter up to 24 or 30 inches) and the pressure is typically 100-200 bars. Presently existing Coriolis mass flow meters have a maximum diameter of 16 inches and may not be used for measuring mass flow of fluid in such large pipes. For transport of fluids at very high pressures e.g. 300 bars, the largest usable traditional Coriolis meter may be only 6-7 inches and with a large thickness to withstand the pressure. For measurement of fluids with low density a Coriolis flowmeter must have thin tubular walls to be able to detect the mass flow. Thin tubular walls cannot withstand high pressure. Existing Coriolis mass flow meters may therefore not be used in high pressure applications e.g. fluid at a pressure above 100 bars, if the line size are not very small. Existing Coriolis mass flow meters would have to be made with a large thickness to be able to withstand these high pressures that would result in a too stiff construction that are unable to vibrate for detection of mass flow. For high operation pressures and/or large diameter pipelines, the pressure carrying metal pipe for the Coriolis flow meter would be thick. Applying a force to the measuring pipe by use of electromagnetic actuators would then not be possible for such a thick pipeline. Traditional Coriolis flow meters may also not be able to measure the mass flow of low density fluids, as this would require a high speed of the fluid flow to provide a signal and such a high speed would not be possible. The design of the traditional Coriolis flow meter with reduced diameter tubes as compared with the pipe for the fluid flow may also result in a pressure drop over the mass flow meter due to a venturi effect. For H₂ the pressure drop over the traditional Coriolis mass flow meter may e.g. be 50-100 bars. The pressure drop may result in boiling of e.g. the fluid e.g. liquid CO₂ , providing bubbles in the fluid flow resulting in a poor measurement by the mass flow meter.

US5,392,656 discloses a mass flowmeter with a nonvibrating conduit providing a flow passage divided into two parallel and equal subpassages by a planar member with the leading and trailing edges secured to the wall of the flow passage. The planar member is torsionally vibrated about the central axis thereof substantially coinciding with the center line of the flow passage. Two actuators are arranged on the inside of the conduit facing each other. The actuators may extend into the wall of the conduit or through the wall to be close to the planar member. A pair of vibration sensors detect the torsional vibration of the planar member respectively at two different cross sections of the flow passage. The mass flow rate of media moving through the flow passage is determined as a function of a phase angle difference between two alternating electrical signals respectively provided by the pair of vibration sensors. The arrangement of the actuators close to the planar member provides a limited vibratory torque to the planar member.

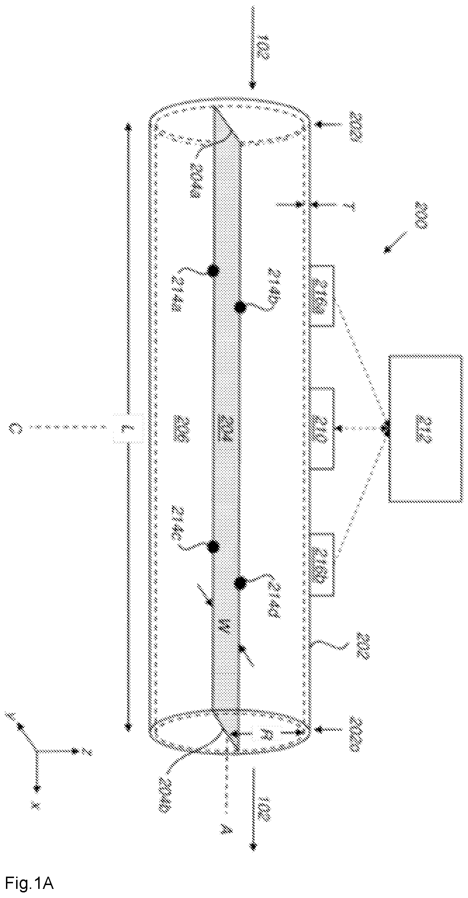

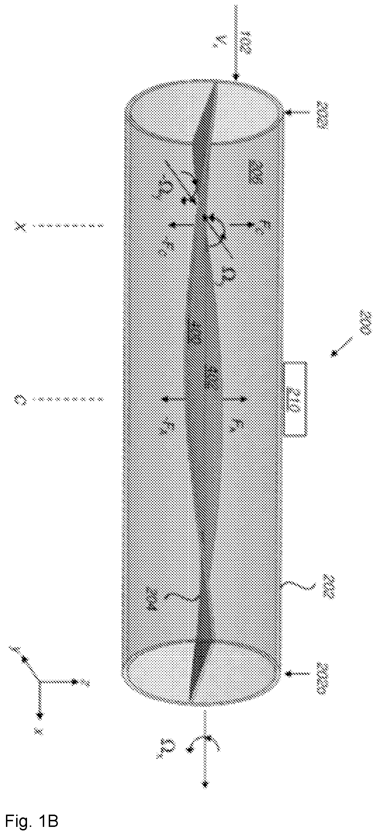

US10393560B2, discloses a mass flow meter 200 with a tubular housing 202, a flexible plate 204, an actuator 210, and at least two sensors 214 (214a, 214b, 214c, 214d), 216 (216a, 216b, 216c, 216c, 216d) as illustrated in Fig.1. The tubular housing 202 may be in the form of a generally circular cylinder having av length **L,** a wall thickness T and an inner radius R defining av cavity 206. The tubular housing has an inlet 202i for a fluid flow 102, and an outlet 202o for the fluid flow 102. The flexible plate has a width W. The flexible plate 204 can be coupled to an interior wall of the tubular housing such that the flexible plate can vibrate in torsion. The actuator 210 can be configured to apply an oscillating torque to the flexible plate sufficient to vibrate the flexible plate in torsion. The at least two sensors 214, 216 can each be configured to measure oscillations of the flexible plate as a function of time at different locations. The mass flow meter can also include a computing device 212 in electrical communication with the at least two sensors and configured to determine a mass flow of fluid passing through the tubular housing from a phase shift between oscillations of the flexible plate measured by the at least two sensors.

As high-pressure fluids are often transported in thick-walled pipes that can be difficult to vibrate with sufficient strength for mass flow meters, the mass flow meter disclosed in US10393560B2 is provided with a tubular housing containing a flexible plate that vibrates in a twisting manner (torsion). The vibration of the plate is altered by the fluid flow therethrough. By measuring oscillations of the flexible plate at different locations, a phase lag of the plate oscillations can be measured and related to mass flow of a fluid traveling through the tubular housing, regardless of its thickness.

For measurements of mass flow in low density fluids and/or high-pressure fluids there may be challenges with sensitivity for prior art solutions.

### SUMMARY OF THE INVENTION

An improved mass flow meter is provided.

The invention provides a mass flow meter comprising a tubular housing extending along a longitudinal axis and configured to receive a flow of fluid therethrough and a flexible plate extending along at least a part of the tubular housing and at least partially coupled to an interior wall of the tubular housing at opposed longitudinal ends of the flexible plate such that the flexible plate is able to vibrate in torsion. At least one electromagnetic actuator system is configured to apply at least two oscillating torques to the flexible plate sufficient to vibrate the flexible plate in torsion. At least two sensor systems are configured to measure oscillations of the flexible plate as a function of time at locations arising from the at least two applied oscillating torques.

Further, a net sum of the at least two oscillating torques applied to the flexible plate may be zero or substantially zero. The at least two oscillating torques may have opposite directions. A sum of the at least two oscillating torques is less than the largest of the at least two oscillating torques.

It is further disclosed that the at least one electromagnetic actuator system may comprise an electromagnetic device arranged on the outside of the tubular housing and a magnetizable material arranged on the inside of the tubular housing. The electromagnetic device may comprise at least one coil arranged on the outside of the tubular housing. The magnetizable material may be arranged on the flexible plate. The magnetizable material may comprise at least one permanent magnet. The magnetizable material may comprise at least one group of permanent magnets wherein the permanent magnets may be symmetrically arranged side by side forming a dipole. The magnetizable material may comprise four groups of permanent magnets forming a quadrupole. The magnetizable material may alternatively comprise four groups of permanent magnets forming a dipole. Each of the two sensor systems of the mass flow meter may comprise a pick-up. In an embodiment the at least one electromagnetic actuator system may be adapted to also function as a sensor system.

The at least one coil may also be arranged to provide an alternating electromagnetic field alternatingly magnetizing and demagnetizing the magnetizable material.

In an embodiment, the tubular housing of the mass flow meter may be a liner of a non-magnetizable material. A pressure housing may be arranged on the outside of the liner.

In a further aspect, the invention provides a method for measuring mass flow through at least one tubular housing. The method comprising receiving a flow of fluid through the at least one tubular housing, wherein the tubular housing comprising a flexible plate extending along at least a part of the at least one tubular housing and is at least partially coupled to an interior wall of the at least one tubular housing at opposed longitudinal ends of the flexible plate such that the flexible plate is able to vibrate in torsion. The method further comprising driving by at least one actuator system the flexible plate within the at least one tubular housing to vibrate in a torsional mode at a selected frequency by applying at least two oscillating torques to the flexible plate to vibrate the flexible plate in torsion; measuring a plurality of oscillations of the flexible plate by at least two sensor systems configured to measure oscillations of the flexible plate as a function of time at at least two locations arising from the at least two applied oscillating torques; and determining a mass flow of the fluid flowing within the at least one tubular housing based on a phase shift between the oscillations measured at the at least two locations.

A net sum of the at least two oscillating torques applied to the flexible plate may be zero or substantially zero. The at least two oscillating torques may have opposite directions. A sum of the at least two oscillating torques is less than the largest of the at least two oscillating torques. If e.g. applying three oscillating torques the sum of all the oscillating torques should be zero or substantially zero. In a further aspect, the mass flow meter as disclosed above or the method as disclosed above may be used of for measuring mass flow of a fluid flow of CO₂, NH₃, H₂ or natural gas.

The improved disclosed mass flow meter provides increased sensitivity in particular for fluids with lower density and lower viscosity such as gas, e.g. CO₂ , NH₃, H₂ or natural gas. The mass flow meter also provides increased sensitivity for liquid CO₂, liquid NH₃, liquid H₂ or liquid natural gas (LNG) that are often transported at high pressures. The mass flow meter is also able to measure mass flow of two-phase fluid flows or multiphase fluid flows.

Use of at least two actuating systems symmetrically arranged around the longitudinal center of the flexible plate provides increased sensitivity. Two actuating systems may excite the flexible plate in 2^{nd} harmonics oscillations or higher even order harmonics. This enables adaptation of the mass flow meter to the particular fluid flow that is to be measured. The use of two torques contribute to excite the desired modi. The torques are oppositely directed and the sum of the torques may be around zero or substantially zero. The 2^{nd} and the 4^{th} harmonics oscillations may be the most practical choices for reasons described below, but also the 3^{rd} harmonics may be performed by using unsymmetrical torques. Higher odd number harmonics may also be possible.

The use of two actuating systems provides an increased Q (quality) factor for the mass flow meter. A higher Q factor provides a sharper resonance peak for the flexible plate. A sharper resonance peak and hence a narrower frequency range results in a mass flow meter less prone to be affected by noise from the surroundings. A high Q factor also means that the ratio between the energy input from the actuators into the flexible plate and the resulting energy from the oscillations of the flexible plate is high. The energy required to drive the system would thus be reduced. An increased Q factor of the mass flow meter results in an increased signal, noise reduction and increased measuring sensitivity.

In some applications, it is not desirable nor possible to use a tubular housing that is electrically conductive. In some applications as for high operation pressures (e.g. typically above 200 bars) and/or large diameter pipes (e.g. typically above 24 inches), the pressure carrying metal tubular housing may also be too thick for electromagnetic actuation of the torsion of the flexible pipe. In these applications may then be desirable to arrange the actuator(s) and the sensor(s) on the inside of the tubular housing e The actuator and/or sensor coils should then be protected. The pressure from the flowing fluid inside the tubular housing should also be transferred to the outside pressure carrying housing. This may be done e.g. by use of a metal membrane filled with liquid (e.g. oil) or molded plastic which may transfer the process pressure to the pressure carrying metal tubular housing. The tubular housing may be a liner. A pressure housing may be arranged outside the liner. The electromagnetic actuators may be arranged on the inside of the pressure housing, but on the outside of the liner. The space between the pressure housing and the liner may be filled with a liquid or solid filler material to transfer the pressure from the fluid flow on the inside of the liner and out to the pressure housing. The filler material also serves to protect the electromagnetic actuator. As the tubular housing may be a liner it does not need to withstand the high pressure of the fluid flow- The flexible plate should also be soft enough to measure the mass flow of gas, as e.g. a fluid flow of CO₂, NH₃, H₂ or natural gas in liquid or gas form or multiphase flow and even at high pressures. The mass flow meter may be used in large diameter pipes, as the liner with flexible plate do not need to be able to withstand high pressures themselves and the design of the flexible plate would be flexible and soft enough even at large diameters.

The actuator systems and the sensor systems may be arranged in positions corresponding to the maximum amplitudes of a 4^{th} harmonic torsional oscillation of the flexible plate; i.e. at 1/8, 3/8, 5/8, 7/8 of the length of the tubular housing. These positions also leave enough room for both the actuator systems and the sensor systems of the mass flow sensor.

### BRIEF DESCRIPTION OF DRAWINGS

Example embodiments will be described with reference to the following drawings, where,
Figure 1A is a perspective view of one exemplary embodiment of a prior art mass flow meter including a tubular housing and flexible plate positioned within the tubular housing;
Fig.1B is the prior art solution from Fig.1A illustrated with forces for the torsion acting on the flexible plate, where the flexible plate is illustrated in a resulting actuated state;
Figure 2A is a perspective view illustrating an exemplary embodiment of a mass flow meter including a tubular housing and a flexible plate positioned within the tubular housing and where the mass flow meter is provided with two actuating devices arranged about a longitudinal center of the flexible plate and two sensors arranged about a longitudinal center of the flexible plate, and with the flexible plate illustrated in an actuated state;
Figure 2B is a perspective view illustrating an exemplary embodiment of a mass flow meter including a tubular housing and a flexible plate positioned within the tubular housing and where the mass flow meter is provided with two actuating devices arranged about a longitudinal center of the flexible plate and two sensors arranged about a longitudinal center of the flexible plate, and with the flexible plate illustrated in an unactuated state and where the flexible plate is provided with groups of magnets or magnetizable material;
Figure 2C is a perspective view illustrating an exemplary embodiment of a mass flow meter including a tubular housing and a flexible plate positioned within the tubular housing and provided with an actuating device arranged in an area about a longitudinal center of the flexible plate, and with the flexible plate illustrated in an unactuated state and with groups of magnets or magnetizable material arranged on the flexible plate;
Fig. 3A is a perspective view illustrating a flexible plate with four vanes that may be used in a mass flow meter, where the flexible plate is illustrated in an actuated, twisted 1^{st} harmonic state;
Fig. 3B is a perspective view of the flexible plate from Fig. 3A where the flexible plate with four vanes that may be used in a mass flow meter, is illustrated in an actuated, twisted 2^{nd} harmonic state;
Fig. 3C is a perspective view of the flexible plate from Fig. 3A where the flexible plate with four vanes that may be used in a mass flow meter, is illustrated in an actuated, twisted 3^{rd} harmonic state;
Fig. 3D is a perspective view of the flexible plate from Fig. 3A where the flexible plate with four vanes that may be used in a mass flow meter, is illustrated an actuated, twisted 4^{th} harmonic state;
Fig.4A is a perspective view of a further exemplary illustration of a mass flow meter with two tubular housings arranged in parallel adjacent to each other and with a flexible plate positioned within each of the tubular housings. The two flexible plates include four vanes, and where the two flexible plates are illustrated in a 1^{st} harmonic position of opposite phase.;
Fig. 4B shows the mass flow meter illustrated in Fig.4, illustrating the fluid flows Vz1 and Vz2 entering the respective tubular housings and where an actuator system actuates the two flexible plates with a force -Fₓ₁ and Fₓ₂ respectively providing the 1^{st} harmonic excitation of opposite phase respectively;
Fig.4C shows the cross-sections of each of the two tubular housings from Fig.4B illustrating the four vanes, actuator system and the forces -Fₓ₁ and Fₓ₂ acting on the vanes;
Fig.5A illustrates in cross-section an embodiment of an electromagnetic actuator system for a mass flow meter, where groups of permanent magnets each forming a dipole are arranged in each of the four vanes of a flexible plate forming a quadrupole cross section, and with the coil systems of the electromagnetic actuator system arranged on the outside of the tubular housing;
Fig.5B illustrates in cross-section an embodiment of an electromagnetic actuator system for a mass flow meter, where groups of permanent magnets each group forming a dipole are arranged in each of the four vanes of a flexible plate forming av 4-group dipole cross section and with two coil systems surrounding the flexible plates on each side of the center of the flexible plate;
Fig.5C illustrates in cross-section an embodiment of an electromagnetic actuator system for a mass flow meter, where groups of permanent magnets each group forming a dipole are arranged in each of the four vanes of a flexible plate forming a 2-group dipole cross section and with two coil systems surrounding the flexible plates on each side of the center of the flexible plate;
Fig.6 illustrates in longitudinal cross-section of a tubular housing of a mass flow meter with an internal liner and outer tube working as pressure containing part;
Fig. 7 is a flow diagram illustrating an exemplary embodiment of a method for measuring mass flow.

The drawings are illustrations and are not necessarily to scale. The drawings are intended to illustrate example embodiments of the subject matter disclosed herein, and should therefore not be considered as limiting the scope of the disclosure.

### DETAILED DESCRIPTION

Example embodiments are described with reference to the drawings. The drawings are illustrations for understanding of the principles of the disclosed mass flow meter concerning e.g. the construction, function, manufacture and use of the mass flow meter and its different parts. The drawings are not necessarily to scale.

Fig. 1 illustrates a prior art mass flowmeter 200 with a fluid channel 100 (e.g., a pipe or pipeline) containing a flowing fluid and a mass flow meter 200 at least partially coupled thereto at respective ends. The mass flow meter 200 has a tubular housing 202 and a flexible plate 204 configured to vibrate in torsion such that measurement of the movement of the flexible plate 204 can be related to mass flow of the flowing fluid. Mass flow can be measured directly by the mass flow meter 200 regardless of the geometry of the tubular housing 202. The prior art mass flowmeter is provided with one actuator 210 positioned on a surface of the tubular housing 204 in a longitudinal center of the tubular housing. The actuator is configured to apply an oscillating torque to the flexible plate sufficient to vibrate the flexible plate in torsion. The frequency of the actuator may be set to a resonance frequency of the flexible plate. Two sensors 214, 216 are arranged symmetrically about the longitudinal center of the tubular housing to measure a plurality of oscillations of the flexible plate as a function of time at these two locations arising from the applied oscillating torque.

Fig.1B illustrates the mass flow meter from Fig.1A where torsion is applied to the flexible plate. As shown, the longitudinal axis A of the flexible plate is parallel to the x-axis of the mass flow meter. Forces F_{A} , -F_{A} applied by the actuator may have opposite directions parallel to the y-axis. The forces may act along the width, partly or whole width, of the flexible plate. The applied forces F_{A} , -F_{A} is varied in magnitude and direction to provide an oscillating torque exciting the flexible plate to vibrate in a torsional mode. The resulting Coriolis forces -F_{C}, F_{C} acting on the flexible plate provides a torsional vibration with an angular velocity Ω_{y} and Ω_{y}.

When the flexible plate is excited and vibrates in a torsional mode and interacts with the fluid flow to be measured, a phase shift will occur between the oscillations in two different positions of the flexible plate. The mass of the flowing fluid effects the excitation of the flexible plate and causes a delay of the excitation or wave travelling along the flexible plate. This delay may be viewed as some sort of Doppler effect when travelling along the flexible plate in the longitudinal direction. The phase shift is approximately proportional to the mass flow of the fluid flow.

The sensors may therefore be arranged a distance apart to provide a sufficiently long travel length for the fluid flow along the flexible plate before detection by the second sensor. A direct measurement of mass flow of the fluid may be achieved by determining the proportionality constant of the mass flow meter. Estimation of the mass flow of fluid may then be performed by a computing device receiving sensor signals from the sensor system.

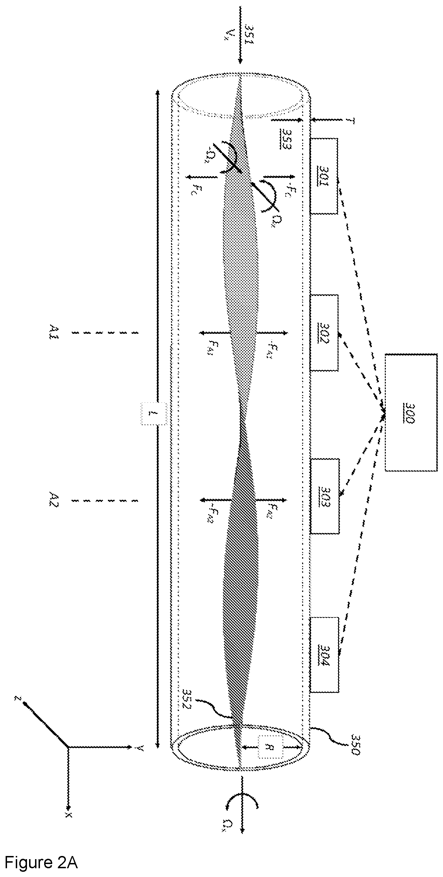

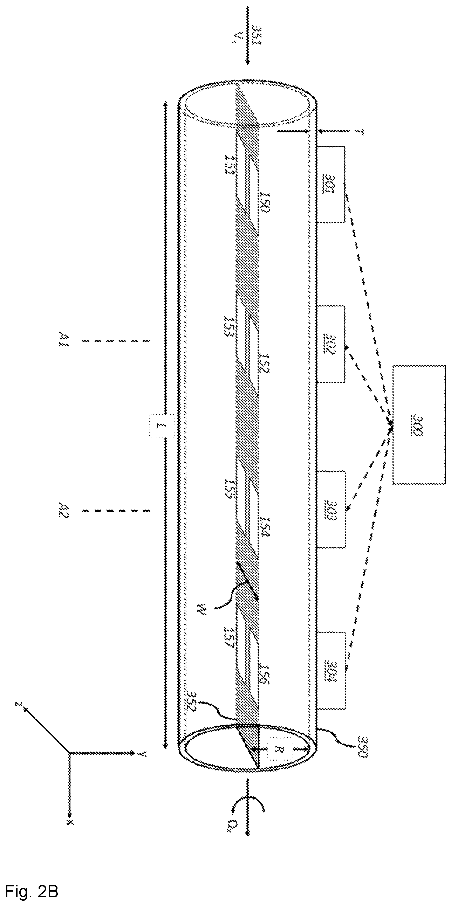

Fig. 2A and 2B illustrate exemplary embodiments of a mass flow meter 310 with a tubular housing 350. The tubular housing may be in the form of a generally circular cylinder having a length L, a wall thickness T, and an inner radius R defining a cavity 353 The length L of the tubular housing 350 and the cavity 353 extend along a longitudinal axis A between a housing inlet and a housing outlet positioned at ends of the tubular housing 350 The tubular housing 350 may be substantially straight between the housing inlet and the housing outlet. The surfaces of the tubular housing in contact with the fluid flow may be rounded and smooth to avoid unnecessary friction disturbing the fluid flow.

The tubular housing 353 may take other geometric forms depending e.g. on the fluid channel (e.g. pipeline) and the fluid flow to be monitored, as well as other circumstances as e.g. temperature and/or pressure of the surroundings, temperature and/or pressure of the fluid flow, the material of the fluid channel , and the tubular housing. The geometry and/or materials of the tubular housing may be approximately the same as that of the fluid channel. The tubular housing may be formed from any suitable materials including, for example, polymers, ceramics, metals, and metal alloys (e.g., steels, copper and copper alloys, aluminum and aluminum alloys, etc.).

The mass flow meter 310 may be integrally formed with the fluid channel. The entire fluid flow Vₓ 351passes through the mass flow meter. An inlet and an outlet of the mass flow meter housing may form a fluid-tight coupling with the fluid channel or pipeline pumps, dispensers, etc. of the fluid flow system. Examples of fluid-tight couplings can include, but are not limited to, threaded engagements, clamps, welds, and the like.

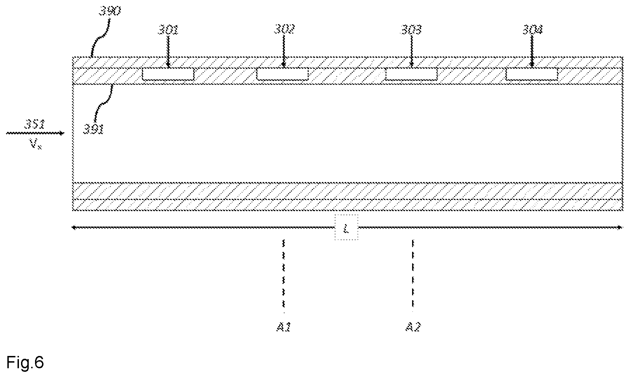

The mass flow meter 310 may be arranged inside a pipeline. The tubular housing is then not exposed to pressure from the surroundings enabling use of the mass flow meter in high pressure environments. This enable the tubular housing to be made of a much thinner and lighter material than the pipeline. The tubular housing may be a liner. The liner may be made of non-magnetizable material. The liner may be made of an electrically conducting or electrically non-conducting material. A pressure housing 390 (Fig.6) may be arranged outside the liner 391. The pressure housing may be made of an electrically conducting material.

The electromagnetic actuator systems (302, 303) may include an electromagnetic device arranged on the outside of the tubular housing and a magnetizable material arranged on the inside of the tubular housing. The two forces from the actuator systems are indicated as F_{A1}, - F_{A1} and F_{A2}, - F_{A2} respectively. These force couples are the same as the torques. The resulting Coriolis forces -F_{C}, F_{C} acting on the flexible plate provides a torsional vibration with an angular velocity Ω_{y} and Ω_{y}. A net sum of the two oscillating torques applied to the flexible plate may be zero or substantially zero. The at least two oscillating torques may have opposite directions as illustrated in Fig.2A. A sum of the at least two oscillating torques is less than the largest of the at least two oscillating torques. If e.g. applying three oscillating torques the sum of all the oscillating torques should be zero or substantially zero. The mass flow meter is provided with two sensor systems (301, 304).

Fig.6 illustrates an embodiment a mass flow meter with an internal liner 391 and outer tube 390 working as pressure containing part. The electromagnetic actuators 302, 303 and the sensor systems 301, 304 may be arranged on the inside of the pressure housing, but on the outside of the liner. The space between the pressure housing and the liner may be filled with a liquid or solid filler material to transfer the pressure from the fluid flow 351 on the inside of the liner 391 and out to the pressure housing. The filler material may also serve to protect the electromagnetic actuators and sensor systems. As the tubular housing may be a liner it does not need to withstand the high pressure of the fluid flow. This solution may e.g. be used for measuring high pressure fluids where the outer pressure housing would be too thick and use of electromagnetic actuators would not be possible.

FIG. 2A illustrates the flexible plate 352 positioned within the tubular housing. The flexible plate is illustrated in a 2^{nd} harmonic oscillation. The tubular housing forming a cavity 353. The flexible plate 352 can extend in the direction of the longitudinal axis A of the tubular housing 350. The flexible plate 352 may extend along at least a part of the tubular housing 350. The flexible plate can be at least partially coupled to an interior wall of the tubular housing 350 (e.g., a wall of the cavity 353) at one or more locations. The flexible plate may be partially coupled to an interior wall of the tubular housing at opposed longitudinal ends of the flexible plate. As an example, a first terminal end of the flexible plate can be at least partially coupled to the tubular housing at or near the housing inlet i and a second terminal end of the flexible plate can be at least partially coupled to the tubular housing at or near the housing outlet. The flexible plate may alternatively be mounted to the tubular housing 350 at one of the terminal ends of the flexible plate. In further embodiments, more than one flexible plate 352 can be positioned within the housing (not shown).

As illustrated in FIG. 2B, the flexible plate 352 can be in the form of a substantially planar plate. The flexible plate may have a width W approximately equal to an inner diameter (2R) of the tubular housing 350. As any gap between the wall of the cavity 353 and the flexible plate 352 is small this does not allow a significant amount of the fluid Vₓ to pass between opposite edges of the flexible plate 352 (e.g., vertically in FIG. 2B). As the gap is small, the flexible plate interacts with substantially the entire fluid flow passing through the tubular housing. In some embodiments, the flexible plate may have a curved shape in an equilibrium or unfixed state (not shown). The flexible plate may in some embodiments be extended/stretched and provided with a tension when attached inside the tubular housing, to change the resonance frequency of the flexible plate.

The mass flow meter can include an actuator system 302, 303. The actuator system may be configured to apply at least two oscillating torques to the flexible plate sufficient to vibrate the flexible plate in torsion. The actuator system may include two actuators 302, 303 as illustrated in Fig.2A and 2B. As shown in FIG. 2A and 2B, the two actuators are be positioned outside the tubular housing 350. Positioning outside the tubular housing may e.g. involve on the surface of the tubular housing, or adjacent to the outer surface of the tubular housing. The actuator system 302, 303 may be arranged in different positions in the longitudinal direction of the tubular housing. The actuators may be positioned symmetrically about a longitudinal centre of the flexible plate 352.

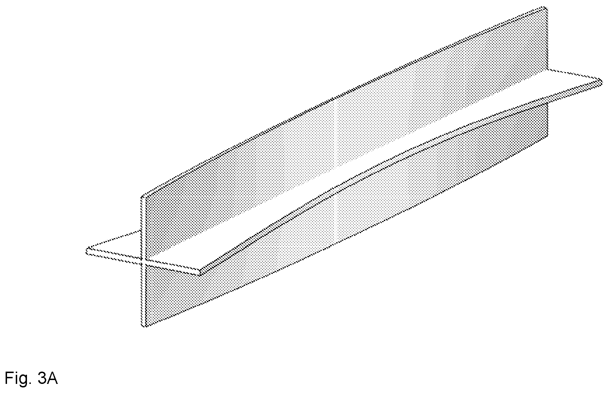

The actuators 302, 303 can be configured to apply an oscillating torque to the flexible plate 352 to drive the flexible plate to vibrate in a torsional mode at a selected frequency. The torsional mode may be a resonance frequency of the flexible plate, including the fundamental frequency but also even and uneven harmonics. The torsional mode may be a 2^{nd} harmonic oscillation, 3^{rd} harmonic oscillation or 4^{th} harmonic oscillation as illustrated in Figures 3A-3D respectively, but also higher harmonics may be applied. In Fig.2A-2B the actuators 302, 302 are positioned at 3/8 and 5/8 of the length of the flexible plate. Sensors or sensor system 301, 304 for detecting the result of the interaction between the fluid flow and the actuated flexible plate 352 are positioned in positions corresponding to 1/8 and 7/8 of the length of the flexible plate. These positions (1/8, 3/8, 5/8, 7/8) correspond to the positions of the amplitude maxima of a 4^{th} harmonic oscillation of the flexible plate, which will be described later.

At least two actuators may be used. A net sum of the at least two oscillating torques applied to the flexible plate by the at least two actuators may be zero or substantially zero. The at least two oscillating torques may have opposite directions. A sum of the at least two oscillating torques is less than the largest of the at least two oscillating torques. If e.g. applying three oscillating torques the sum of all the oscillating torques should be zero or substantially zero.

The actuators 302, 303 may be electromagnetic actuators. An electromagnetic actuator may be in the form of one or more electromagnetic coils. An electromagnetic coil is a coil that may have a magnetic core. The coils may be arranged around the tubular housing and the magnetic core provided by a magnetic material 150, 151, 152, 153, 154, 155, 156, 157 arranged in or on the flexible plate. At least a portion of the flexible plate 352 can be formed from a magnetic material (e.g., metals, metal alloys, steels, polymers, etc.). The flexible plate 352 can include one or more embedded permanent magnets 150, 151, 152, 153, 154, 155, 156, 157. The magnetic material or permanent magnet(s) 150, 151, 152, 153, 154, 155, 156, 157 may also be arranged on the outer surface of the flexible plate 352. The magnetic material and permanent magnets 150, 151, 152, 153, 154, 155, 156, 157 may be arranged on the flexible plate in positions within the magnetic field from the coils. The permanent magnets or the magnetic material of the flexible plate may be arranged in corresponding positions as the coils as illustrated in Fig.2B, to enable effective actuation of the flexible plate by the magnetic field from the coils. The coils may be connected to a controller 300 or e.g. computing device for controlling the current supplied to the coils generating the magnetic field to apply an oscillating torque to the flexible plate at a selected frequency. At least one of the magnitude, frequency and/or phase of the current applied to the coils may be controlled to enable generating one or more magnetic field(s) to apply an oscillating torque to the flexible plate. The flexible plate may be driven at resonance frequency both at fundamental frequency, but also at even and uneven harmonics. The controller may e.g. be a computer or power supply.

The coils may be configured to receive feedback e.g. from a sensor system to drive the flexible plate at resonance.

As mentioned, the mass flow meter 310 can also include a sensor system 301, 304 to measure the interaction between the mass flow and the flexible plate vibrating in torsion. The sensor system 301, 304 may be configured to measure movement of the flexible plate 352 as a function of time. The sensor system 301, 304 may measure the movement of the flexible plate at positions upstream and downstream of the longitudinal centre C with respect to the flow of fluid Vₓ 351. The movement of the flexible plate 352 can be characterized by any parameter of the flexible plate that oscillates as a function of time when the flexible plate vibrates in torsion. Example parameters can include, but are not limited to, linear and/or angular parameters such as position, speed, acceleration, and displacement. In certain embodiments, angle, angular speed, and angular acceleration can be measured. In other aspects, stress and/or strain can be measured. The sensor system 301, 304 may be in the form of pickup sensors arranged at positions along the tubular housing. The pickup sensors may measure rotational speed and direction of the flexible plate. The pick-up sensors may e.g. be based on the Hall effect or may be magnetic pick-up sensors. Magnetic pick-up sensors may have coils arranged on the outside of the tubular housing e.g. on, embedded in or partially embedded in or near the tubular housing. In other embodiments, the sensors may be in the form of electromagnetic sensors. The electromagnetic sensors may be electromagnetic coils with coils arranged around the tubular housing and with the magnetic core provided by magnetic material in or on the flexible plate as explained above for the actuating system. The electromagnetic sensors may also in some embodiments be the actuating system itself. The electromagnetic actuating system may then be controlled to switch between an actuating mode applying an oscillating torque to the flexible plate and a detecting mode detecting movements of the flexible plate. The mode switching may be performed continuously or intermittently during measurement by the mass sensor. In other embodiments the sensor system may be in the form of strain gauges arranged at the end of the flexible plate. In the end of the flexible plate, there is no speed or acceleration. The sensor system may be connected to a computing device or controller or other device receiving sensor signals from the sensor system. The computer device, controller or other device may also control the sensor system.

The sensor system 301, 304 may include a number of sensors arranged in different positions in the mass flow meter. The sensor system may be arranged in positions where the flexible plate exhibits the largest movement during excitation by the applied torque. In Fig. 2A, 2B the sensor system is as earlier described, provided with two sensors positioned where the 4^{th} harmonic oscillation of the flexible plate has maximum amplitudes. These positions are at 1/8, 3/8, 5/8, 7/8 of the length of the flexible plate. Measurement of the largest parameter values ensures a large signal output from the sensor system and thus an increased sensitivity. Actuating the flexible plate by the actuating system in positions of the largest amplitudes, results in a higher energy transfer to the flexible plate also contributing to an improved sensitivity for the mass flow sensor. Using two sensors, a first sensor may be positioned at 1/8 and a second sensor at 7/8 of the length of the flexible plate as illustrated in Fig.2A. This leaves space for the positioning of the actuating systems at 3/8 and 5/8 of the length of the flexible plate as illustrated in Fig.2A and as explained above. Driving the flexible plate in 2^{nd}, 3^{rd}, 4^{th} and higher harmonics may increase the Q-factor and the sensitivity of the mass sensor. The Q-factor is in simplified terms in this context a relationship between the energy of the flexible plate in an oscillating behavior and the energy input into the flexible plate to provide the oscillating behavior. In general, the resulting torsion applied to the flexible plate should be in a position where an applied torque result in an oscillating behavior with large amplitudes of the flexible plate. In these positions with the largest amplitudes, the flexible plate will also experience the largest changes in speed and acceleration when exposed to the fluid flow. These changes are measured by the sensor system of the mass flow meter. The positioning of sensors and actuating system in positions corresponding to the 4^{th} harmonics of the flexible plate, may also be used for 2^{nd} and 3^{rd} harmonics. The positioning of the sensors and actuating system would then also be close to the amplitude maxima for the oscillations of the flexible plate. The embodiment illustrated in Fig.2A, 2B enable the mass flow meter to be driven in both uneven and even harmonic states offering flexibility of the mass flow meter and the possibility of adaption of the mass flow meter to the actual flow situation and the information desired from the mass flow meter. Even harmonic states provide an oscillation torque where a net sum of the oscillating torques applied to the flexible plate is zero or substantially zero. It may be possible to drive the mass flow meter in several modi simultaneously to enable detection of mass flow in a two-phase flow such as, e.g. a liquid flow with bubbles. This may be advantageous for measurement of mass flow for e.g. CO₂, NH₃, H₂ or LNG.

The flexible plate may be provided with a number of vanes . The number of vanes may be two, three, four or higher number of vanes as e.g. eight or more. The vanes may extend radially outward at about 90° with respect to one another. The angle between the vanes can be varied. The vanes can possess approximately equal width. The number of vanes and the angle between the vanes may vary depending on the characteristics of the fluid flow to be measured and other factors as the environment and surroundings of the fluid flow. The vanes increase the stiffness of the flexible plate and avoids bending of the flexible plate without increasing the torsional stiffness of the flexible plate. The mass sensor is based on applying oscillating torques to the flexible plate to vibrate the flexible plate in harmonic oscillations and a high sensitivity for torsion increases the flexible plate's sensitivity for viscosity of the fluid flow. E.g. for mass measurement of a low density fluid flow such as liquid gas e.g. H₂, or a high density liquid at high density such as e.g. CO₂, the torsional stiffness should be low to be able to measure the mass flow of H₂ and CO₂ with a sufficiently high sensitivity.

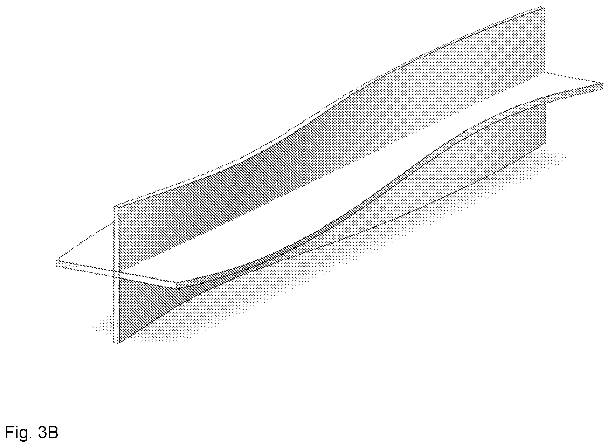

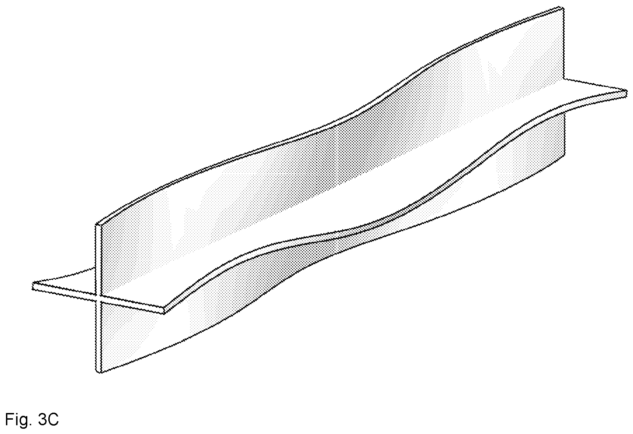

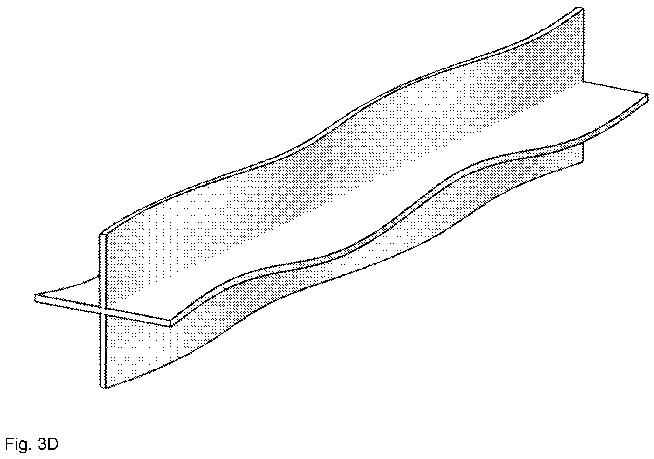

Fig.3A-D illustrate an embodiment of the flexible plate 352 with four vanes. The vanes are arranged in a cross-configuration with each vane arranged at an angle of 90 degrees with respect to each other. The figures illustrate the flexible plate in different torsional harmonic modes actuated by an actuating system. The illustrations show the maximum amplitude positions in the different harmonic modes. Fig. 3A illustrates the flexible plate in an actuated state in the 1^{st} harmonic oscillation. In this 1^{st} harmonic state, the maximum amplitude is at the longitudinal center of the flexible plate. Actuating systems arranged in the area around the longitudinal center would provide the largest Q-factor for the flexible plate. The positioning and arrangement of the sensors would depend on the type of sensor used. Fig. 3B illustrates the flexible plate in an actuated state in the 2nd harmonic oscillation. The largest amplitudes are at positions ¼ and ¾ of the length of the flexible plate and these positions would provide the largest Q-factor for the system. Fig. 3C illustrates the flexible plate in an actuated state in the 3rd harmonic oscillation. The amplitude maxima are seen at positions 1/6, 3/6, 5/6 of the length of the flexible plate. Fig. 3D illustrates the flexible plate in an actuated state in the 4th harmonic oscillation with maximum amplitudes at 1/8, 3/8, 5/8 and 7/8 of the length of the flexible plate.

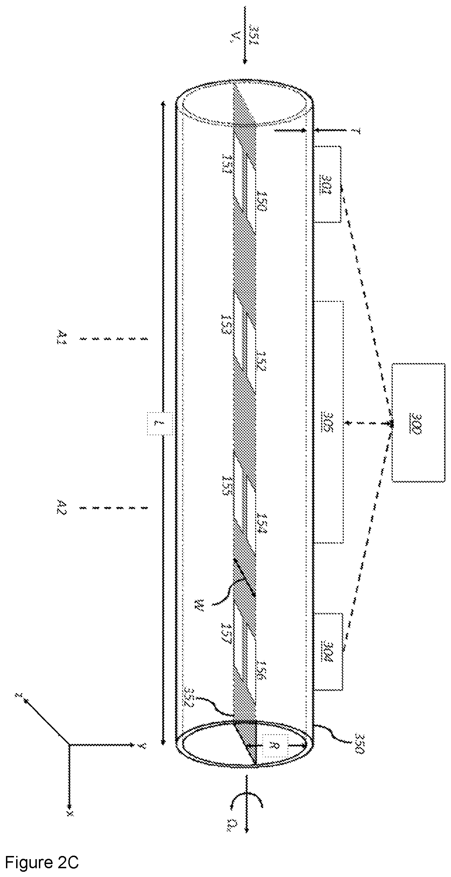

Fig.2C illustrates an embodiment where an actuator system 305 is arranged in an area about a longitudinal center of the flexible plate extending over the assigned magnetic material or permanent magnet(s) 152, 153, 154, 155 in positions A₁ and A₂. The magnetic material or permanent magnets are arranged anti-symmetrically with respect to their magnetic poles such that by driving the common coil system actuating forces F_{A1}, - F_{A1} and F_{A2}, - F_{A2} respectively are applied to the flexible plate in positions A₁ and A₂ with the directions illustrated by the arrows (Fig.2A). The sensor systems 301, 304 may be the same sensor systems as in Fig.2A and 2B. The actuator system covers an area of the flexible plate. The actuator system in Fig.2B may be provided by an electromagnetic actuating system with at least two coils arranged around the tubular housing and the magnets 152, 153, 154, 155 (e.g. permanent magnets or a magnetizable material) in, on or embedded in the flexible plate 352. Each coil may include a plurality of windings covering a first and a second area of the tubular housing. Each coil may be arranged side by side such that the first and second areas cover the entire area of the actuator system illustrated in Fig.2C. Each coil may also be arranged a distance from the center of the tubular housing in the area illustrated by the actuator system in Fig. 2C. Two groups of permanent magnets forming dipoles may be arranged on or in the flexible plate, or partly embedded or embedded in the flexible plate. The coils may be arranged at a distance sufficiently apart from each other to be able to apply at least two oscillating torques to the flexible plate to vibrate the flexible plate with the permanent magnets in torsion. The two groups of dipole permanent magnets may be anti-symmetrically arranged with respect to their magnetic poles. Each permanent magnet may be a bar magnet and a group may be formed by arranging each bar magnet side by side with the poles facing in the same direction to provide a more powerful magnet. A group may also include a plurality of layers of bar magnets. Forming a group of permanent dipole magnets results in a forceful magnetic dipole increasing the magnetic field and thus the resulting torque applied to the flexible plate. By driving the two coils symmetrically; i.e. driving the two coils with a current having the same frequency and phase, the magnetic fields from the two coils will have the same direction at the same time. As the two groups of dipole magnets are arranged with opposed dipoles, the flexible plate will experience two oppositely directed oscillating torques applied to the flexible plate in the position A1, A2 of the group of magnets. The net sum of the oscillating torques applied to the flexible plate may be zero or substantially zero. By using two coils, the actuator system may be configured to apply at least two oscillating torques to the flexible plate sufficient to vibrate the flexible plate in torsion. The embodiment in Fig.2C may vibrate the flexible plate in a 1^{st} harmonic oscillation.

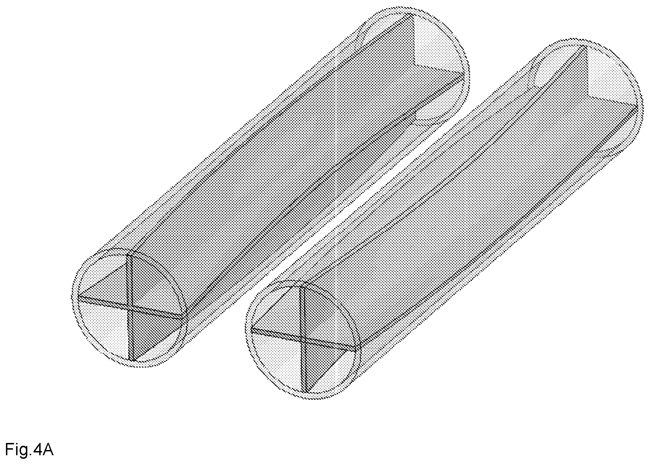

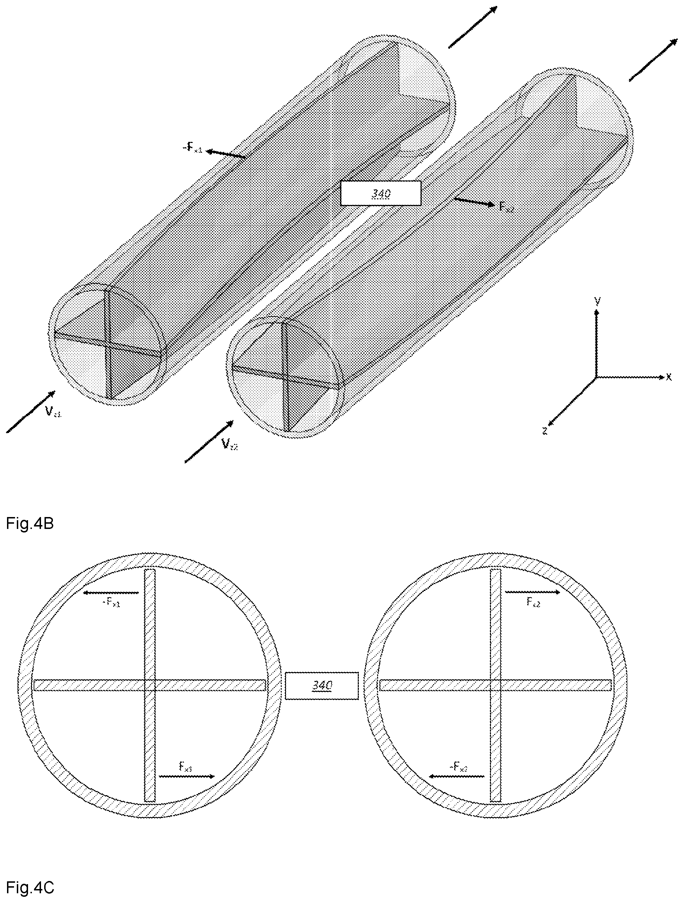

Fig.4A, 4B illustrates a further embodiment of the mass flow meter 310, where two tubular housings 350are arranged side by side. Each tubular housing is provided with a flexible plate 352. Each flexible plate extending along at least a part of the tubular housing and is at least partially coupled to an interior wall of the tubular housing at opposed longitudinal ends of the flexible plate such that the flexible plate is able to vibrate in torsion. The two flexible plates are illustrated in a 1^{st} harmonic position of opposite phase. The fluid flow to be measured is made to flow through both the tubular housings. The flexible plate may be provided with a number of vanes. in Fig.4A, 4B each flexible plate is provided with four vanes arranged at an angle of 90 degrees with respect to each other. The actuator system 340 may be arranged in an area at the longitudinal center of the flexible plate. One actuator system may be provided covering both the tubular housings. This common actuator system may e.g. have a coil covering the two tubular housings. Permanent magnets or magnetizable material may be provided in each flexible plate. An actuator system may alternatively be provided for each of the tubular housings. The actuator system may actuate the two flexible plates with forces -Fₓ₁ and Fₓ₂ respectively providing the 1^{st} harmonic oscillation of opposite phase respectively as shown.

The two flexible plates are illustrated in a 1^{st} harmonic torsional excitation, but where the torsional oscillation of the 1^{st} harmonics have opposite phase. The fluid flow flows through both the tubular housings of the mass flow meter, and as the fluid flow interacts with the oscillating flexible plates of opposite phase, the combined signals from the sensors of the mass flow meter may have increased sensitivity. The torsional stiffness of the flexible plate may have small variations along its length and using two similar flexible plates oscillating in different phase may even out these small variations in torsional stiffness.

Fig.4C shows the cross-sections of each of the two tubular housings from Fig.4B illustrating the four vanes, actuator system and the direction of the forces -Fₓ₁ and Fₓ₂ acting on the vanes. The configuration of the flexible plate with four vanes as illustrated in Fig. 4A-4C may be used e.g. in the mass flow meter illustrated in Fig.2A-2C.

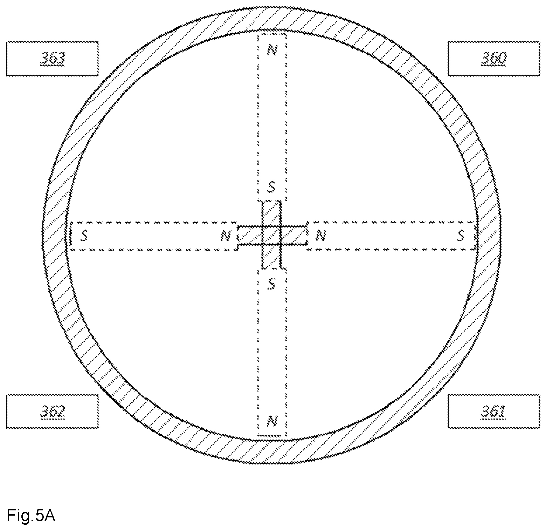

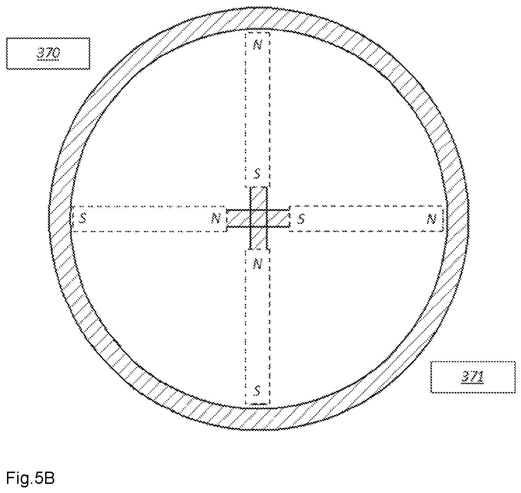

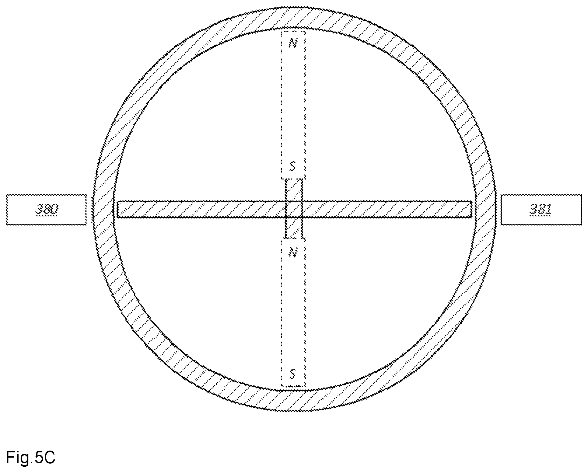

Possible configurations of the coils and the permanent magnets of an electromagnetic actuating system are illustrated in Fig.5A-5C for a flexible plate with four vanes. Fig. 5A-5C are shown in cross-section showing the configuration of the permanent magnets. Fig.5A illustrates a quadrupole cross section and with the coil systems 360, 361, 362, 363 of the electromagnetic actuator system arranged on the outside of the tubular housing. The magnets in the vanes are arranged with alternating magnetic poles facing outwards (north, south, north, south). Fig.5B illustrates a 4-group dipole cross section of permanent magnets and with two coil systems 370, 371 surrounding the flexible plates on each side of the center of the flexible plate. The magnets are arranged with pairs of magnetic poles facing outwards (north, north, south, south). Fig.5C illustrates a 2-group dipole cross section of permanent magnets and with two coil systems 380, 381 surrounding the flexible plates on each side of the center of the flexible plate. The magnets in the vanes are arranged with different magnetic poles facing outwards (north, south,) forming a dipole.

In Fig.5A the electromagnetic actuator system has groups of permanent magnets arranged in each of the four vanes of the flexible plate. Each group of magnets may be formed by dipole bar magnets arranged side by side forming a dipole. The direction of the dipole is altered from one vane to the next vane as illustrated in Fig.5A. In a first vane the north pole N points outwards and in the second vane the north pole N points inwards, in the third vane the north pole N points outwards and in the fourth vane the north pole N points inwards. The south poles S of the first vane and the third vane face each other, and the north poles for the second vane and the fourth vane face each other. In Fig.5A the groups of magnets facing each other also have dipoles facing each other. The groups of magnets may be arranged around the longitudinal center of the flexible plate. Two coils may form a common coil system surrounding the flexible plate in an area of the longitudinal axis of the flexible plate. By controlling the phase of the current applied to the coils, oscillating torques of opposite directions are applied to each of the vanes of the flexible plate due to alternation of the direction of the dipole between the vanes. The frequency of the current is also controlled to torsionally excite the flexible plate in a harmonic oscillation and the magnitude of the current controlled to provide a desired amplitude of the oscillations of the vanes.

In the embodiment of Fig.5B two electromagnetic actuator systems 370, 371, where each system is as illustrated in Fig. 5A, may be symmetrically arranged with respect to the longitudinal center of the flexible plate. The first actuator system may be arranged in position 3/8 of the longitudinal length of the flexible plate, and the second actuator system may be arranged in position 5/8 of the longitudinal length of the flexible plate. Each actuator system may include groups of permanent bar magnets arranged side by side with the same pole facing the same way (symmetrically arranged) forming a dipole in each vane in the same positions (3/8 and 5/8) as the two coils surrounding the flexible plate. In this embodiment the two groups of magnetic dipoles of each vane have the same direction. The two electromagnetic actuator systems may be driven with current of opposite phase (anti-symmetrically) to apply a torsion to the flexible plate providing a 4^{th} harmonic oscillation of the flexible plate. Increasing the number of windings increases the magnetic field from the coil.

In Fig.5B, if the two groups of permanent magnets in the actuator systems had been anti-symmetrically arranged with respect to each other; i.e. the magnetic poles of the two groups of permanent magnets had been facing in the opposite direction, the coils of each actuator system would be driven in symmetry, i.e. with the same frequency, phase and amplitude. In Fig.5A where the actuator system has two coils, these two coils are driven with current of opposite phase. The groups of permanent magnets in Fig.5A may also be arranged with the dipoles of each group of magnets facing the same way. The applied current to the two coils illustrated in Fig.5A would then have opposite phase, but the same frequency and magnitude.

The groups of magnets illustrated in Fig.5A form a quadrupole. Using eight vanes and one group of magnets in each vane, this form an octupole. Multipole arrangements of permanent magnets increase the torsion for the same applied current. In the illustrated embodiments in Fig. 5A and 5B, bar magnets are used, but also round magnets may be used. Also, several groups of magnets may be provided in each vane depending on the torsional force required.

The configuration of the groups of magnets may vary. They may be symmetrically arranged as illustrated in Fig.5B. They may also be anti-symmetrically arranged (not shown) where the poles of a group of magnets have opposite direction in position 3/8 and 5/8 in the same vane. The current in the coils of the actuating system for anti-symmetrically arrange groups of magnets, are in phase (symmetrical) to apply a net sum of the at least two oscillating torques applied to the flexible plate being zero or substantially zero. The at least two oscillating torques have opposite directions. A sum of the at least two oscillating torques is less than the largest of the at least two oscillating torques.

The configuration of magnetizable material and the frequency, phase and magnitude of the current applied to the coils, may also be designed according to the principle of a reluctance motor to generate torque based on magnetic reluctance. The flexible plate with magnetizable material would correspond to the rotor of the reluctance motor. The coils arranged on the outside of the tubular housing would correspond to the stator poles. The current in the coil would be controlled such that the phase of the current changes as a function of time to provide the desired effect with respect to generating a torque corresponding to the movement between the stator and rotor of a reluctance motor. In this configuration corresponding to the reluctance motor principle, the actuator system may also be used as the sensor system may as explained earlier. The current phase and frequency applied to the coils would then also be driven intermittently in time to switch between a torque generation mode generation a torque in the flexible plate and a detection mode detecting the movement of the flexible plate as a result of the applied torque. The configuration based on the reluctance motor principle may be apply torques driving the flexible plate in the 1^{st} harmonic state when two electromagnets are driven with opposite phase (anti-symmetric).

The actuating system with electromagnetic actuators and permanent magnets (the embedded permanent magnets) may be arranged in various configurations to achieve torsional vibration of the flexible plate at resonance frequencies of the flexible plate. The material of the housing may not be made of magnetic material in an embodiment with electromagnetic actuators and embedded permanent magnets.

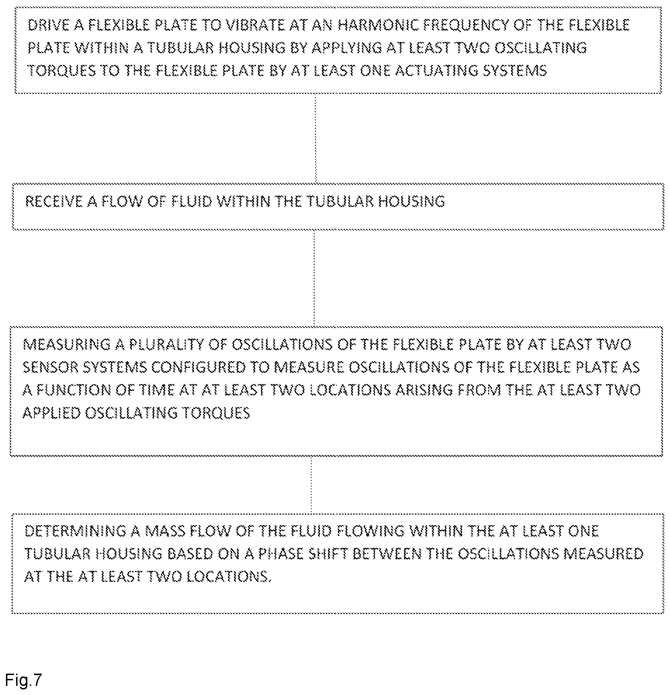

Fig. 7 is a flow diagram illustrating an exemplary embodiment of a method for measuring mass flow. The mass flow meter is connected to the fluid flow to be measured. The fluid flow flows through the at least one tubular housing. The least one actuator system drive the flexible plate within the at least one tubular housing to vibrate in a torsional mode at a selected frequency by applying at least two oscillating torques to the flexible plate to vibrate the flexible plate in torsion. A plurality of oscillations of the flexible plate are measured by the at least two sensor systems configured to measure oscillations of the flexible plate as a function of time. The sensor systems measure the oscillations in at least two locations arising from the at least two applied oscillating torques. A mass flow of the fluid flowing within the at least one tubular housing is determined based on a phase shift between the oscillations measured at the at least two locations.

A net sum of the at least two oscillating torques applied to the flexible plate may be zero or substantially zero. The at least two oscillating torques may have opposite directions. The two torques may then cancel each other and provide a significantly improved differential measurement. A sum of the at least two oscillating torques is less than the largest of the at least two oscillating torques. The mass flow meter may be used for measuring mass flow of e.g. CO₂, NH₃, and H₂ or LNG or other gas flows at high pressures.

Having described example embodiments of the invention it will be apparent to those skilled in the art that other embodiments incorporating the concepts may be used. These and other examples illustrated above are intended by way of example only and the actual scope of the invention is to be determined from the following claims.

## Claims

1. A mass flow meter, comprising:
- a tubular housing (350) extending along a longitudinal axis and configured to receive a flow (351) of fluid therethrough;
- a flexible plate (352) extending along at least a part of the tubular housing (350) and at least partially coupled to an interior wall of the tubular housing at opposed longitudinal ends of the flexible plate such that the flexible plate is able to vibrate in torsion;
- at least one electromagnetic actuator system (302, 303, 305) configured to apply at least two oscillating torques to the flexible plate (352) sufficient to vibrate the flexible plate in torsion; and
- at least two sensor systems (301, 304) configured to measure oscillations of the flexible plate (352) as a function of time at locations arising from the at least two applied oscillating torques;
**characterized in that**
a sum of the at least two oscillating torques is less than the largest of the at least two oscillating torques.

2. Mass flow meter according to claim 1, wherein a net sum of the at least two oscillating torques applied to the flexible plate is zero or substantially zero.

3. Mass flow meter according to claim 1 or claim 2, wherein the at least two oscillating torques have opposite directions.

4. Mass flow meter according to claim 1, wherein the at least one electromagnetic actuator system (302, 303, 305) comprising an electromagnetic device arranged on the outside of the tubular housing (350) and a magnetizable material (152, 153, 154, 155) arranged on the inside of the tubular housing.

5. Mass flow meter according to claim 1, wherein the electromagnetic actuator system (302, 303, 305) comprises at least one coil arranged on the outside of the tubular housing.

6. Mass flow meter according to claim 4, wherein the magnetizable material (152, 153, 154, 155) is arranged on the flexible plate (352).

7. Mass flow meter according to claim 4, wherein the magnetizable material comprises at least one permanent magnet.

8. Mass flow meter according to claim 4, wherein the magnetizable material comprises at least one group of permanent magnets wherein the permanent magnets are symmetrically arranged side by side forming a dipole.

9. Mass flow meter according to claim 4, wherein the magnetizable material comprises four groups of permanent magnets forming a quadrupole.

10. Mass flow meter according to claim 4, wherein the magnetizable material comprises four groups of permanent magnets forming a dipole.

11. Mass flow meter according to one of claims 1-10, wherein each of the two sensor systems (301, 304) comprising a pick-up.

12. Mass flow meter according to one of claims 1-11, wherein the at least one electromagnetic actuator system is adapted to also function as a sensor system.

13. Mass flow meter according to claim 1-12, wherein the tubular housing is a liner (391) of a non-magnetizable material.

14. Mass flow meter according to claim 13, further comprising a pressure housing (390) arranged outside the liner (391).

15. Mass flow meter according to claim 5-14, wherein the at least one coil is arranged to provide an alternating electromagnetic field alternatingly magnetizing and demagnetizing the magnetizable material.

16. A method for measuring mass flow through at least one tubular housing (350), comprising:
- receiving a flow (351) of fluid through the at least one tubular housing, wherein the tubular housing comprising a flexible plate (352) extending along at least a part of the at least one tubular housing and is at least partially coupled to an interior wall of the at least one tubular housing at opposed longitudinal ends of the flexible plate such that the flexible plate is able to vibrate in torsion;
- driving by at least one actuator system (302, 303, 305) the flexible plate within the at least one tubular housing to vibrate in a torsional mode at a selected frequency by applying at least two oscillating torques to the flexible plate to vibrate the flexible plate in torsion;
- measuring a plurality of oscillations of the flexible plate by at least two sensor systems (301, 304) configured to measure oscillations of the flexible plate as a function of time at at least two locations arising from the at least two applied oscillating torques; and
- determining a mass flow of the fluid flowing within the at least one tubular housing based on a phase shift between the oscillations measured at the at least two locations;
**characterized in that**
a sum of the at least two oscillating torques is less than the largest of the at least two oscillating torques.

17. Method according to claim 16, wherein a net sum of the at least two oscillating torques applied to the flexible plate is zero or substantially zero.

18. Method according to claim 16 or claim 17, wherein the at least two oscillating torques have opposite directions.

19. Use of the mass flow meter of one of claims 1-15 or the method according to one of claims 16-18 for measuring mass flow of a fluid flow of CO₂, NH₃, H₂ or natural gas.

## Patentansprüche

1. Massenströmungsmesser, umfassend:
- ein rohrförmiges Gehäuse (350), das sich entlang einer Längsachse erstreckt und konfiguriert ist, um eine Strömung (351) von Fluid dahindurch aufzunehmen;
- eine flexible Platte (352), die sich entlang mindestens eines Teils des rohrförmigen Gehäuses (350) erstreckt und mindestens teilweise an eine Innenwand des rohrförmigen Gehäuses an gegenüberliegenden Längsenden der flexiblen Platte derart gekoppelt ist, dass die flexible Platte in der Lage ist, in Torsion zu schwingen;
- mindestens ein elektromagnetisches Betätigungssystem (302, 303, 305), das konfiguriert ist, um mindestens zwei oszillierende Drehmomente auf die flexible Platte (352) anzulegen, die ausreichen, um die flexible Platte in Torsion schwingen zu lassen; und
- mindestens zwei Sensorsysteme (301,304), die konfiguriert sind, um Oszillationen der flexiblen Platte (352) in Abhängigkeit von einer Zeit an Stellen zu messen, die sich aus den mindestens zwei angelegten oszillierenden Drehmomenten ergeben;
**dadurch gekennzeichnet, dass**
eine Summe der mindestens zwei oszillierenden Drehmomente kleiner als das größte der mindestens zwei oszillierenden Drehmomenten ist.

2. Massenströmungsmesser nach Anspruch 1, wobei eine Nettosumme der mindestens zwei oszillierenden Drehmomente, die auf die flexible Platte angelegt werden, null oder im Wesentlichen null ist.

3. Massenströmungsmesser nach Anspruch 1 oder 2, wobei die mindestens zwei oszillierenden Drehmomente entgegengesetzte Richtungen aufweisen.

4. Massenströmungsmesser nach Anspruch 1, wobei das mindestens eine elektromagnetische Betätigungssystem (302, 303, 305) eine elektromagnetische Vorrichtung, die an der Außenseite des rohrförmigen Gehäuses (350) angeordnet ist, und ein magnetisierbares Material (152, 153, 154, 155), das an der Innenseite des rohrförmigen Gehäuses angeordnet ist, umfasst.

5. Massenströmungsmesser nach Anspruch 1, wobei das elektromagnetische Betätigungssystem (302, 303, 305) mindestens eine Spule umfasst, die an der Außenseite des rohrförmigen Gehäuses angeordnet ist.

6. Massenströmungsmesser nach Anspruch 4, wobei das magnetisierbare Material (152, 153, 154, 155) auf der flexiblen Platte (352) angeordnet ist.

7. Massenströmungsmesser nach Anspruch 4, wobei das magnetisierbare Material mindestens einen Permanentmagnet umfasst.

8. Massenströmungsmesser nach Anspruch 4, wobei das magnetisierbare Material mindestens eine Gruppe von Permanentmagneten umfasst, wobei die Permanentmagneten symmetrisch nebeneinander angeordnet sind, wobei ein Dipol ausgebildet wird.

9. Massenströmungsmesser nach Anspruch 4, wobei das magnetisierbare Material vier Gruppen von Permanentmagneten umfasst, die einen Quadrupol ausbilden.

10. Massenströmungsmesser nach Anspruch 4, wobei das magnetisierbare Material vier Gruppen von Permanentmagneten umfasst, die einen Dipol ausbilden.

11. Massenströmungsmesser nach einem der Ansprüche 1 bis 10, wobei jedes der zwei Sensorsysteme (301, 304) einen Aufnehmer umfasst.

12. Massenströmungsmesser nach einem der Ansprüche 1 bis 11, wobei das mindestens eine elektromagnetische Betätigungssystem geeignet ist, um ebenso als ein Sensorsystem zu funktionieren.

13. Massenströmungsmesser nach Anspruch 1 bis 12, wobei das rohrförmige Gehäuse eine Auskleidung (391) aus einem nicht magnetisierbaren Material ist.

14. Massenströmungsmesser nach Anspruch 13, ferner umfassend ein Druckgehäuse (390), das außerhalb der Auskleidung (391) angeordnet ist.

15. Massenströmungsmesser nach Anspruch 5 bis 14, wobei die mindestens eine Spule angeordnet ist, um ein wechselndes elektromagnetisches Feld bereitzustellen, das das magnetisierbare Material abwechselnd magnetisiert und entmagnetisiert.

16. Verfahren zum Messen einer Massenströmung durch mindestens ein rohrförmiges Gehäuse (350), umfassend:
- Aufnehmen einer Strömung (351) von Fluid durch das mindestens eine rohrförmige Gehäuse, wobei das rohrförmige Gehäuse eine flexible Platte (352) umfasst, die sich entlang mindestens eines Teils des mindestens einen rohrförmigen Gehäuses erstreckt und mindestens teilweise an eine Innenwand des mindestens einen rohrförmigen Gehäuses an gegenüberliegenden Längsenden der flexiblen Platte derart gekoppelt ist, dass die flexible Platte in der Lage ist, in Torsion zu schwingen;
- Antreiben durch mindestens ein Betätigungssystem (302, 303, 305) der flexiblen Platte innerhalb des mindestens einen rohrförmigen Gehäuses, um in einem Torsionsmodus bei einer ausgewählten Frequenz zu schwingen, durch ein Anwenden von mindestens zwei oszillierenden Drehmomenten auf die flexible Platte, um die flexible Platte in Torsion schwingen zu lassen;
- Messen einer Vielzahl von Oszillationen der flexiblen Platte durch mindestens zwei Sensorsysteme (301, 304), die konfiguriert sind, um die Oszillationen der flexiblen Platte in Abhängigkeit von der Zeit an mindestens zwei Stellen zu messen, die sich aus den mindestens zwei angelegten oszillierenden Drehmomenten ergeben; und
- Bestimmen einer Massenströmung des Fluids, das innerhalb des mindestens einen rohrförmigen Gehäuses strömt, basierend auf einer Phasenverschiebung zwischen den Oszillationen, die an den mindestens zwei Stellen gemessen werden;
**dadurch gekennzeichnet, dass**
eine Summe der mindestens zwei oszillierenden Drehmomente kleiner als das größte der mindestens zwei oszillierenden Drehmomenten ist.

17. Verfahren nach Anspruch 16, wobei eine Nettosumme der mindestens zwei oszillierenden Drehmomente, die auf die flexible Platte angelegt werden, null oder im Wesentlichen null ist.

18. Verfahren nach Anspruch 16 oder 17, wobei die mindestens zwei oszillierenden Drehmomente entgegengesetzte Richtungen aufweisen.

19. Verwendung des Massenströmungsmessers nach einem der Ansprüche 1 bis 15 oder des Verfahrens nach einem der Ansprüche 16 bis 18 zum Messen der Massenströmung einer Fluidströmung von CO₂, NH₃, H₂ oder Erdgas.

## Revendications

1. Débitmètre massique, comprenant :
- un logement tubulaire (350) s'étendant le long d'un axe longitudinal et conçu pour recevoir un débit (351) de fluide à travers celui-ci ;
- une plaque flexible (352) s'étendant le long d'au moins une partie du logement tubulaire (350) et accouplée au moins partiellement à une paroi intérieure du logement tubulaire ou au niveau d'extrémités longitudinales opposées de la plaque flexible de telle sorte que la plaque flexible est capable de vibrer en torsion ;
- au moins un système d'actionneur électromagnétique (302, 303, 305) configuré pour appliquer au moins deux couples oscillants à la plaque flexible (352) suffisants pour faire vibrer la plaque flexible en torsion ; et
- au moins deux systèmes de capteur (301,304) configurés pour mesurer des oscillations de la plaque flexible (352) en fonction du temps au niveau de localisations découlant des au moins deux couples oscillants appliqués ;
**caractérisé en ce que**
une somme des au moins deux couples oscillants est inférieure au plus grand des au moins deux couples oscillants.

2. Débitmètre massique selon la revendication 1, dans lequel une somme nette des au moins deux couples oscillants appliqués à la plaque flexible vaut zéro ou sensiblement zéro.

3. Débitmètre massique selon la revendication 1 ou la revendication 2, dans lequel les au moins deux couples oscillants ont des directions opposées.

4. Débitmètre massique selon la revendication 1, dans lequel l'au moins un système d'actionneur électromagnétique (302, 303, 305) comprend un dispositif électromagnétique agencé sur l'extérieur du logement tubulaire (350) et un matériau magnétisable (152, 153, 154, 155) agencé sur l'intérieur du logement tubulaire.

5. Débitmètre massique selon la revendication 1, dans lequel le système d'actionneur électromagnétique (302, 303, 305) comprend au moins une spire agencée sur l'extérieur du logement tubulaire.

6. Débitmètre massique selon la revendication 4, dans lequel le matériau magnétisable (152, 153, 154, 155) est agencé sur la plaque flexible (352).

7. Débitmètre massique selon la revendication 4, dans lequel le matériau magnétisable comprend au moins un aimant permanent.

8. Débitmètre massique selon la revendication 4, dans lequel le matériau magnétisable comprend au moins un groupe d'aimants permanents dans lequel les aimants permanents sont agencés symétriquement côte à côte en formant un dipôle.

9. Débitmètre massique selon la revendication 4, dans lequel le matériau magnétisable comprend quatre groupes d'aimants permanents formant un quadripôle.

10. Débitmètre massique selon la revendication 4, dans lequel le matériau magnétisable comprend quatre groupes d'aimants permanents formant un dipôle.

11. Débitmètre massique selon l'une des revendications 1 à 10, dans lequel chacun des deux systèmes de capteur (301,304) comprend un captage.

12. Débitmètre massique selon l'une des revendications 1 à 11, dans lequel l'au moins un système d'actionneur électromagnétique est conçu pour fonctionner également en tant que système de capteur.

13. Débitmètre massique selon la revendication 1 à 12, dans lequel le logement tubulaire est un chemisage (391) d'un matériau non magnétisable.

14. Débitmètre massique selon la revendication 13, comprenant en outre un logement sous pression (390) agencé à l'extérieur du chemisage (391).

15. Débitmètre massique selon la revendication 5 à 14, dans lequel l'au moins une spire est agencée pour fournir un champ électromagnétique alternatif qui magnétise et démagnétise en alternance le matériau magnétisable.

16. Procédé destiné à mesurer un débit massique à travers au moins un logement tubulaire (350), comprenant :
- la réception d'un débit (351) de fluide à travers l'au moins un logement tubulaire, dans lequel le logement tubulaire comprend une plaque flexible (352) s'étendant le long d'au moins une partie de l'au moins un logement tubulaire et est au moins partiellement accouplé à une paroi intérieure de l'au moins un logement tubulaire au niveau d'extrémités longitudinales opposées de la plaque flexible de telle sorte que la plaque flexible est capable de vibrer en torsion ;
- l'entraînement par au moins un système d'actionneur (302, 303, 305) de la plaque flexible au sein de l'au moins un logement tubulaire pour vibrer dans un mode de torsion à une fréquence sélectionnée en appliquant au moins deux couples oscillants à la plaque flexible pour faire vibrer la plaque flexible en torsion ;
- la mesure d'une pluralité d'oscillations de la plaque flexible par au moins deux systèmes de capteur (301,304) configurés pour mesurer des oscillations de la plaque flexible en fonction du temps au niveau d'au moins deux localisations découlant des au moins deux couples oscillants appliqués ; et
- la détermination d'un débit massique du fluide s'écoulant au sein de l'au moins un logement tubulaire en fonction d'un déphasage entre les oscillations mesurées au niveau des au moins deux localisations ;
**caractérisé en ce que**
une somme des au moins deux couples oscillants est inférieure au plus grand des au moins deux couples oscillants.

17. Procédé selon la revendication 16, dans lequel une somme nette des au moins deux couples oscillants appliqués à la plaque flexible vaut zéro ou sensiblement zéro.

18. Procédé selon la revendication 16 ou la revendication 17, dans lequel les au moins deux couples oscillants ont des directions opposées.

19. Utilisation du débitmètre massique selon l'une des revendications 1 à 15 ou du procédé selon l'une des revendications 16 à 18 pour la mesure d'un débit massique d'un débit de fluide de CO₂, de NH₃, de H₂ ou de gaz naturel.
